# EUROPEAN PATENT APPLICATION

(11) **EP 3 196 417 A1**
(43) Date of publication of application: **26.07.2017**
(21) Application number: 17152693.2
(22) Date of filing: 23.01.2017
(51) Int. Cl.: F01D 5/34

(54) **RIM FACE SCALLOP FOR INTEGRALLY BLADED ROTOR DISK**

(30) Priority: 22.01.2016 US 201615004418
(71) Applicant: United Technologies Corporation, Farmington, CT 06032 (US)
(72) Inventor: QUINN, Ryan H., Manchester, CT Connecticut 06040 (US); LEONA, Brian, Tolland, CT Connecticut 06084 (US)
(74) Representative: Hall, Matthew Benjamin

(57) **Abstract**

An integrally bladed disk (300; 400) is provided. The integrally bladed disk includes a rotor disk having a rim (304; 404) with a rim face and a flow path surface (310; 410) perpendicular to the rim face and integrally formed airfoils (308; 408) circumferentially spaced and extending radially outward from the rim, the flow path surface between adjacent integrally formed airfoils, each integrally formed airfoil having an airfoil edge (321). The rim face includes at least one first surface (314; 414) and at least one second surface (316; 416) formed in the rim face, the at least one first surface being substantially planar and axially proximal to the airfoil edge and the at least one second surface extending an axial depth (D) into the rim face relative to the first surface.

## Description

### BACKGROUND

The subject matter disclosed herein generally relates to gas turbine engines and, more particularly, to rim face scallops for integrally bladed disks in gas turbine engines.

The fan, turbine, and compressor sections of gas turbine engines include one or more circumferentially extending rows or stages of airfoils, commonly called rotor blades, which are axially spaced between rows or stages of fixed airfoils (stator vanes). The rotor blades are connected to and extend radially outwardly from a rotor disk. During operation the centrifugal loads generated by the rotational action of the rotor blades must be carried by the rotor disk within acceptable stress limits.

Conventional rotor blades are carried in the rotor disk by a dovetail or fir tree root which slides into and interlocks with a corresponding dovetail slot in the perimeter of the rotor disk. However, as the number of rotor blades around the perimeter of the disk increases, insufficient material is available for supporting the plurality of rotor blades within acceptable stress limits. Accordingly, integrally bladed disks have been developed and are commercially used. Integrally bladed disks do not utilize the interlocked dovetail design but instead are integrally joined to the rotor blades as a single-piece, unitary assembly by milling, forging, casting, or other known manufacturing operations.

Integrally bladed disks can be used to increase aerodynamic efficiency of the gas turbine engine, with an integral formation of the blades enabling a reduction in the stresses associated with supporting the rotor blades. One of the stresses associated with supporting the rotor blades is a hoop stress. The hoop stress is defined as a load measured in the direction of the circumference of a rotating body, the load being created by thermal gradients and centrifugal forces acting in a radial direction outward from the axis of rotation of the body. The hoop stress is particularly acute where the gas turbine engine utilizes integrally bladed disks. Integrally bladed disks may develop fractures along their perimeter during a lifecycle of a product due to the aforementioned hoop stresses and principle stresses. Accordingly, it may be advantageous to reduce the stresses on the integrally bladed disks.

### SUMMARY

One solution is to form scallops in surfaces of the integrally bladed rotor. Such scallops may be configured on a face of a rim of a rotor disk. The shape, size, depth, geometry, etc. of the scallops and/or location of the scallops can be formed and configured to achieve a desired reduction in the hoop and principle stresses incurred on the integrally bladed disk during operation.

According to one embodiment, an integrally bladed disk is provided. The integrally bladed disk includes a rotor disk having a rim with a rim face and a flow path surface perpendicular to the rim face and integrally formed airfoils circumferentially spaced and extending radially outward from the rim, the flow path surface between adjacent integrally formed airfoils, each integrally formed airfoil having an airfoil edge. The rim face includes at least one first surface and at least one second surface formed in the rim face, the at least one first surface being substantially planar and axially proximal to the airfoil edge and the at least one second surface extending an axial depth into the rim face relative to the first surface.

In addition to one or more of the features described herein, or as an alternative, further embodiments of the integrally bladed disk may include that the airfoil edge is a trailing edge of the integrally formed airfoils.

In addition to one or more of the features described herein, or as an alternative, further embodiments of the integrally bladed disk may include that the at least one first surface and the at least one second surface define a repeating pattern about the rim face of the rotor disk.

In addition to one or more of the features described herein, or as an alternative, further embodiments of the integrally bladed disk may include that opposing rim faces of the rotor disk each include at least one first surface and at least one second surface.

In addition to one or more of the features described herein, or as an alternative, further embodiments of the integrally bladed disk may include that the second surface is located circumferentially between adjacent integrally formed airfoils.

In addition to one or more of the features described herein, or as an alternative, further embodiments of the integrally bladed disk may include that the second surface is a curved surface.

In addition to one or more of the features described herein, or as an alternative, further embodiments of the integrally bladed disk may include that the second surface comprises a tapered portion.

According to another embodiment, a gas turbine engine having a stress relief feature is provided. The engine includes a rotor disk having a rim with a rim face and a flow path surface perpendicular to the rim face and integrally formed airfoils circumferentially spaced and extending radially outward from the rim, the flow path surface between adjacent integrally formed airfoils, each integrally formed airfoil having an airfoil edge. The rim face includes at least one first surface and at least one second surface formed in the rim face, the at least one first surface being substantially planar and axially proximal to the airfoil edge and the at least one second surface extending an axial depth into the rim face relative to the first surface.

In addition to one or more of the features described herein, or as an alternative, further embodiments of the engine may include that the airfoil edge is a trailing edge of the integrally formed airfoils.

In addition to one or more of the features described herein, or as an alternative, further embodiments of the engine may include that the at least one first surface and the at least one second surface define a repeating pattern about the rim face of the rotor disk.

In addition to one or more of the features described herein, or as an alternative, further embodiments of the engine may include that opposing rim faces of the rotor disk each include at least one first surface and at least one second surface.

In addition to one or more of the features described herein, or as an alternative, further embodiments of the engine may include that the second surface is located circumferentially between adjacent integrally formed airfoils.

In addition to one or more of the features described herein, or as an alternative, further embodiments of the engine may include that the second surface is a curved surface.

In addition to one or more of the features described herein, or as an alternative, further embodiments of the engine may include that the second surface comprises a tapered portion.

According to another embodiment, a method of forming an integrally bladed disk is provided. The method includes integrally forming airfoils circumferentially spaced and extending radially outward from a rim of a rotor disk, a flow path surface between adjacent integrally formed airfoils, each integrally formed airfoil having an airfoil edge and forming at least one first surface and at least one second surface in a rim face of the rim, the rim face perpendicular to the flow path surface. The at least one first surface is formed substantially planar and axially proximal to the airfoil edge and the at least one second surface is formed to extend an axial depth into the rim face relative to the first surface.

In addition to one or more of the features described herein, or as an alternative, further embodiments of the method may include that the airfoil edge is a trailing edge of the integrally formed airfoils.

In addition to one or more of the features described herein, or as an alternative, further embodiments of the method may include that the at least one first surface and the at least one second surface define a repeating pattern about the rim face of the rotor disk.

In addition to one or more of the features described herein, or as an alternative, further embodiments of the method may include that opposing rim faces of the rotor disk each include at least one first surface and at least one second surface.

In addition to one or more of the features described herein, or as an alternative, further embodiments of the method may include that the second surface is located circumferentially between adjacent integrally formed airfoils.

In addition to one or more of the features described herein, or as an alternative, further embodiments of the method may include that the second surface is a curved surface and comprises a tapered portion.

Technical effects of embodiments of the present disclosure include an integrally bladed disk that having reduced stresses due to the inclusion of scallops formed in a rim face of a rotor disk.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic sectional view of one embodiment of an aircraft turbofan engine;
FIG. 2A is a perspective view of a circumferential section of one embodiment of an integrally bladed rotor disk that may employ embodiments provided herein;
FIG. 2B is a radial sectional view of the integrally bladed rotor disk illustrated in FIG. 2A;
FIG. 2C is a top perspective view of the perimeter of the integrally bladed rotor disk illustrated in FIG. 2A;
FIG. 3A is a perspective view of an integrally bladed disk in accordance with an embodiment of the present disclosure;
FIG. 3B is a radial sectional view of the integrally bladed rotor disk illustrated in FIG. 3A;
FIG. 3C is a top perspective view of the perimeter of the integrally bladed rotor disk illustrated in FIG. 3A;
FIG. 4 is a top perspective view of the perimeter of an integrally bladed rotor disk in accordance with another embodiment of the present disclosure; and
FIG. 5 is an illustration of a process of forming an integrally bladed disk in accordance with an embodiment of the present disclosure.

### DETAILED DESCRIPTION

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in FIG. X may be labeled "Xa" and a similar feature in FIG. Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

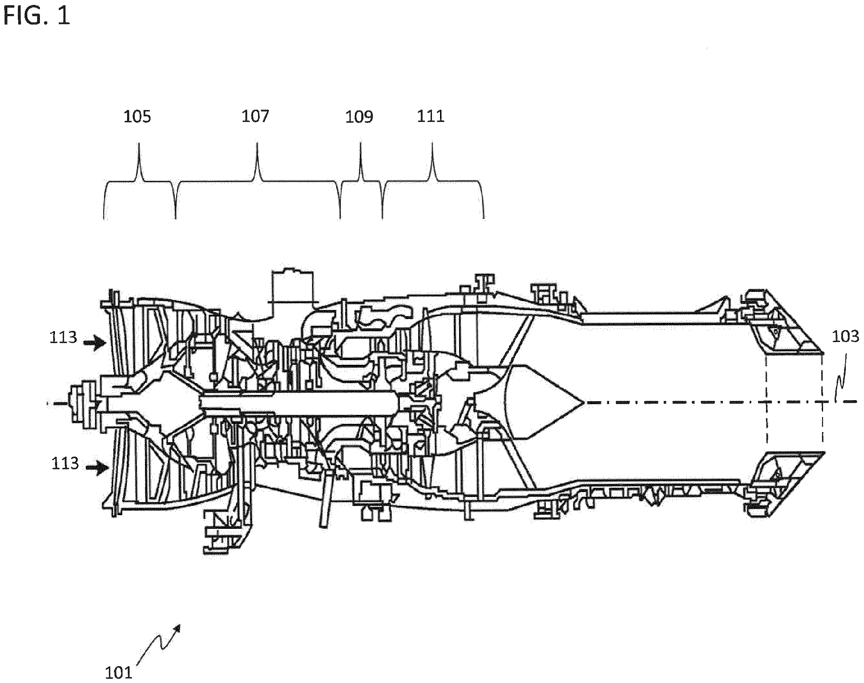

FIG. 1 shows an axial cross-section of gas turbine engine 101 including an engine axis 103, a fan section 105, a compressor section 107, a combustor section 109, and a turbine section 111. The fan section 105 includes a casing that surrounds a rotor to which the blades of a fan are attached. Although one example of a gas turbine engine is shown, those of skill in the art will appreciate that other types and configurations of gas turbine engines (e.g., such as geared turbofan engines) may employ embodiments described herein. Thus, FIG. 1 is provided for explanatory and illustrative purposes and is not intended to be limiting.

In operation, an air stream 113 is pulled into the front of engine 101 by the rotation of the fan blades of the fan section 105 about the engine axis 103. The fan section 105 directs a portion of the air stream 113 into the compressor section 107. The air stream 113 is successively compressed through stages of airfoils in the compressor section 107 and is directed into the combustor section 109. The portion of the air stream 113 that passes through the compressor section 107 is mixed with fuel and ignited in the combustor section 109 and is then directed into the turbine section 111 where the mixture is successively expanded through alternating stages of airfoils comprising turbine rotor blades and stator vanes. A portion of the gas and fuel mixture leaving the combustor section 109 acts to rotate a turbine in the turbine section 111, which powers the fan section 105 and the compressor section 107. The remaining portion of the gas and fuel mixture passing through the turbine section 111 exits the back of the engine 101 to provide thrust for the engine 101. Operating criteria such as the desired size, weight, and thrust capacity of the gas turbine engine 101 and the acceptable stress limits due to centrifugal loads and thermal stresses experienced in some sections or stages of engine 101 can necessitate that the rotor blades be integrally bladed to rotor disks. As used herein, "integrally" means that the blades of the disk are formed from the same piece and material as the disk itself, and thus a single, unitary piece or product is formed with a disk having a plurality of blades formed at a circumference of the disk. That is, the blades cannot, without being damaged, be separated or detached from the disk, but rather are one piece.

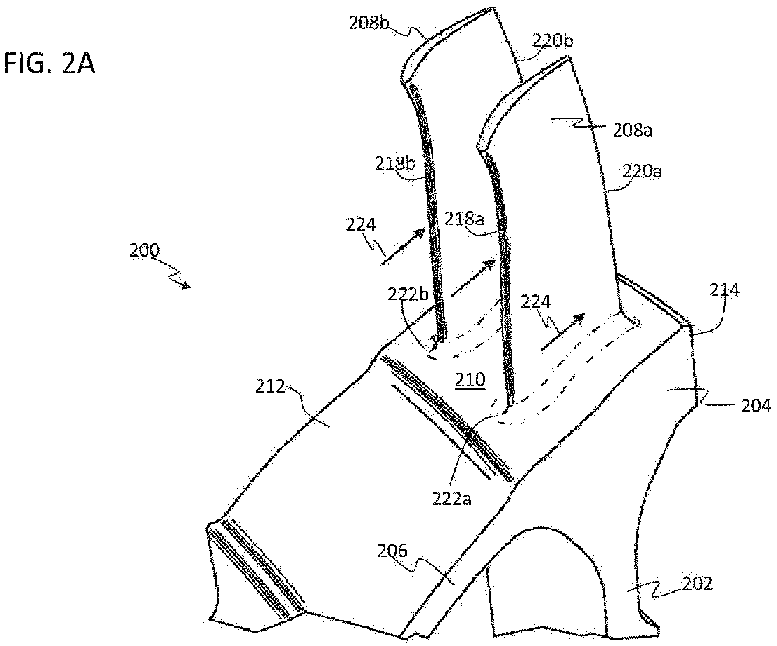

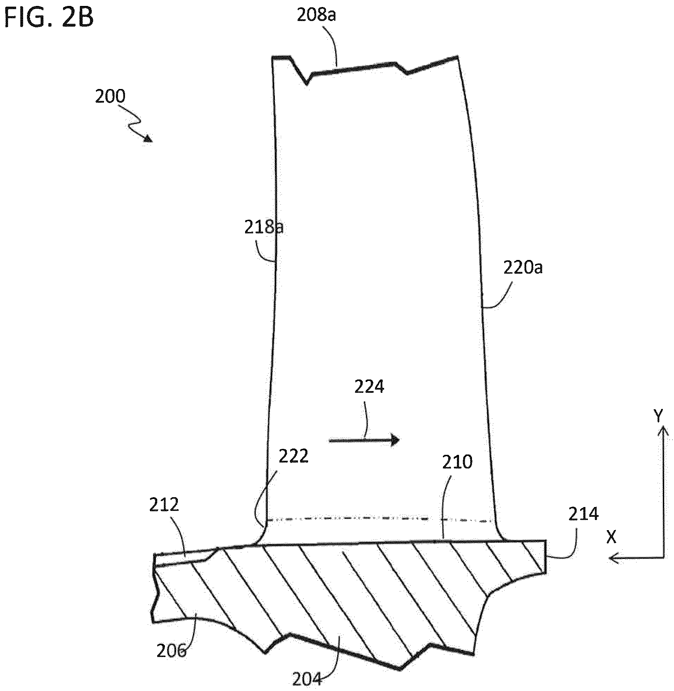

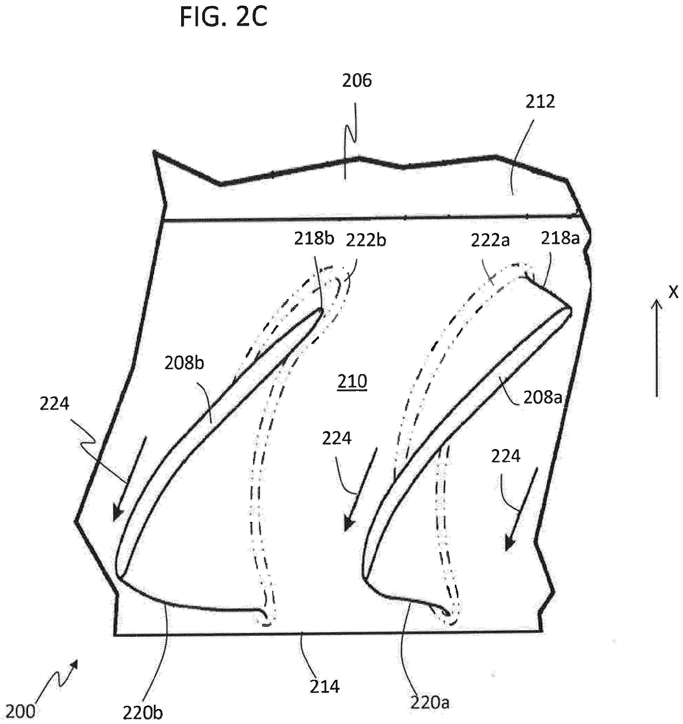

FIGS. 2A-2C are views from various perspectives of a circumferential portion of an integrally bladed disk 200. FIG. 2A is a perspective schematic illustration of an integrally bladed disk 200. FIG. 2B shows a cross-sectional side schematic illustration of the integrally bladed disk 200. FIG. 2C is a top down schematic illustration of the integrally bladed disk 200.

The integrally bladed disk 200 is configured to be connected to a rotor in one or more of the various stages of the engine 101 (FIG. 1), including the fan section 105, the compressor section 107, and/or the turbine section 111. The integrally bladed disk 200 includes a hub (not shown), a web 202, a rim 204, an arm 206, and rotor blades or airfoils 208a and 208b. The rim 204 includes a flow surface 210, a forward coat bed 212 forming a surface of the arm 206, and a first surface 214, such as a rim face of the rotor disk.

Each airfoil 208a, 208b includes leading edges 218a, 218b, trailing edges 220a, 220b, and fillets 222a, 222b. As will be appreciated by those of skill in the art, the forward coat bed 212 may include coatings or other surface treatments that are not shown for simplicity. Although not shown, those of skill in the art will appreciate that the flow surface 210 may include one or more flow path trenches or other features that may aid in flow control along the integrally bladed disk 200. Further, as will be appreciated by those of skill in the art, various other configurations of integrally bladed disks may be formed and employ embodiments as provided herein.

FIG. 2A shows the integrally bladed disk 200 having rim 204 which connects to a hub (not shown) by the web 202. The arm 206 extends axially away from the rim 204 in a forward direction. The axial direction is shown as direction X in the various schematic illustrations and a radial direction is indicated as direction Y, with the axial direction being along the engine axis (e.g., axis 103 of FIG. 1).

The arms of integrally bladed disks may be optional and may extend forward and/or aft (e.g., as defined by the flow direction of a working fluid moving relative to engine axis 103 and passing across the integrally bladed disk 200) of the rim 204. If an arm is not included, the integrally bladed disk may have a rotor blade rim face, e.g., as shown in FIG. 2A (first surface 214). The first surface 214 may be a surface of the rim 204 that is perpendicular to the axial direction X.

The airfoils 208a, 208b comprise a portion of a row of blades (not shown) and extend generally radially outwardly of the rim 204 in a unitary or single-piece manner. The flow surface 210 comprises a radial outer periphery of the rim 204 adjacent the airfoils 208a, 208b. In the configuration shown in FIG. 2A, the flow surface 210 extends axially from the coat bed 212 to the first surface 214 of the rim 204 as defined by the flow direction of a working fluid passing across the flow surface 210. The flow surface 210 also extends circumferentially between the airfoils 208a, 208b. As noted, those of skill in the art will appreciate that flow path trenches can be formed having various geometries and/or locations to achieve a desired reduction in hoop and principle stresses incurred on the integrally bladed disk during operation. The location and geometry of the flow path trenches can be optimized to design criteria using commercially available finite element analysis and computational fluid dynamics software, as known in the art.

Each airfoil 208a, 208b is integrally connected to or formed out of the rim 204 and has a conventional aerodynamic configuration with a generally concave pressure side and generally convex suction side for pressurizing a working fluid during operation. The airfoils 208a, 208b extend from the leading edge 218a, 218b to the trailing edge 220a, 220b, respectively. The fillet 222a, 222b aerodynamically transitions the root or base portion of each airfoil 208a, 208b to the flow surface 210 of the rim 204. Each airfoil 208a, 208b defines, along with the blades disposed circumferentially adjacent to it (not shown), flow paths 224 through which a working fluid is channeled during operation. The radially inward part of the flow paths 224 is defined by the flow surface 210 and the sides of the airfoils 208a, 208b proximal to the flow surface 210 (e.g., the root or base portions of the airfoils 208a, 208b).

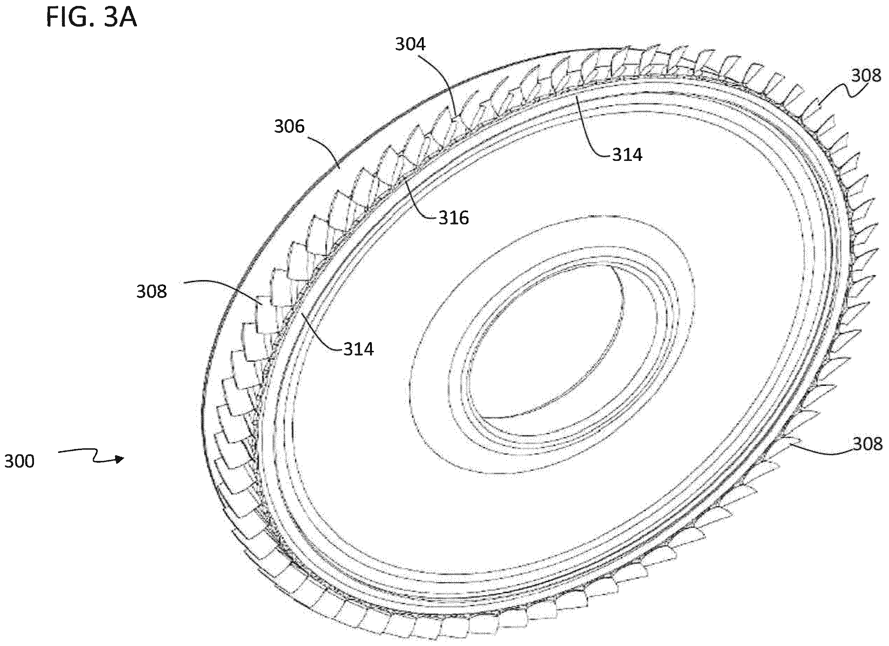

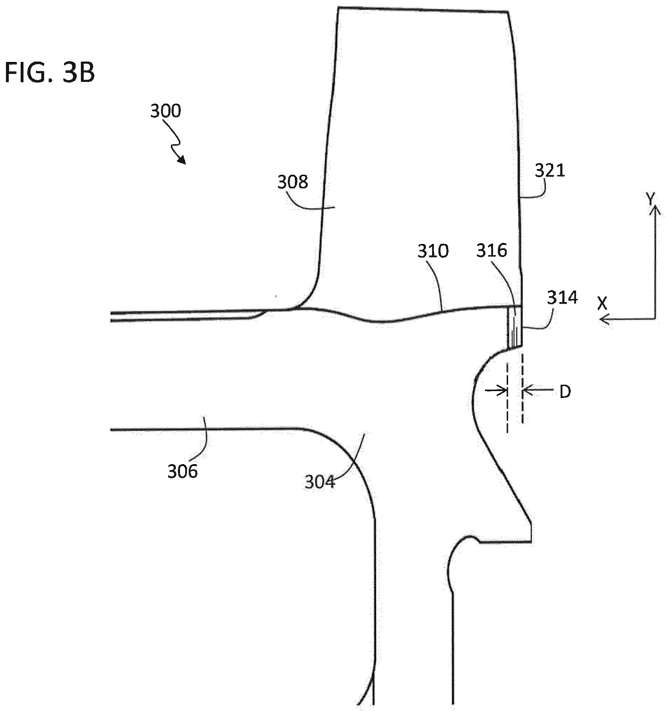

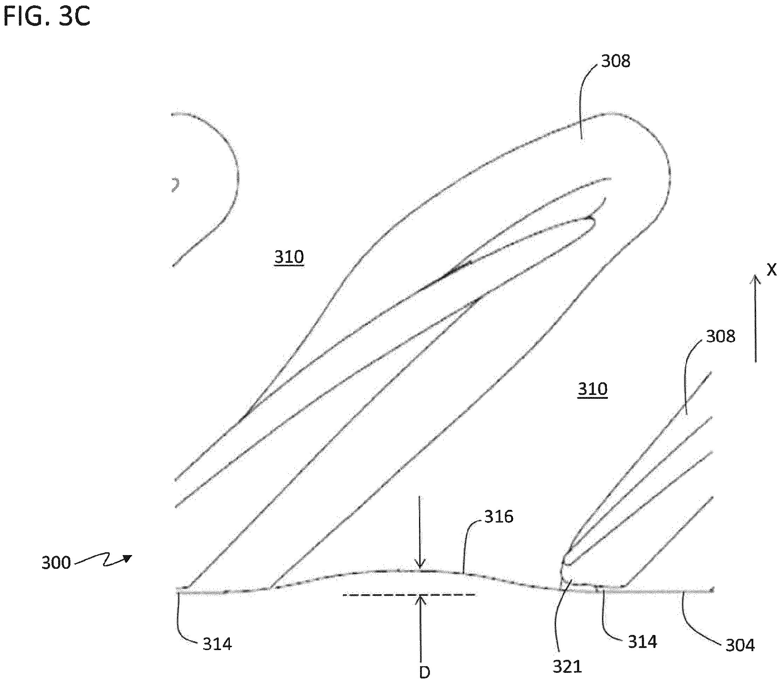

Turning to FIGS. 3A-3C, an integrally bladed disk 300 in accordance with the present disclosure is shown. FIG. 3A shows a perspective schematic illustration of the integrally bladed disk 300. FIG. 3B shows a cross-sectional side schematic illustration of the integrally bladed disk 300. FIG. 3C is a top down schematic illustration of the integrally bladed disk 300.

The integrally bladed disk 300 includes a plurality of airfoils 308 extending from a rim 304. The airfoils 308 may have similar construction to that described above. Between adjacent airfoils 308 around the integrally bladed disk 300 is a flow path surface that is part of the rim 304. As shown, the integrally bladed disk 300 includes an arm 306 and a first surface 314 that defines one side of the rim 304, such as a rim face. Formed into the first surface 314 and located between adjacent airfoils 308 may be a second surface 316. The second surface 316 may be a formed surface of the first surface 314 that is cut away and extends toward an opposing surface of the rim 304. In some embodiments, the second surface 316 may be a scalloped surface.

As shown in FIG. 3B and 3C, the second surface 316 may be a portion of the rim 304 that is removed, and cuts axially into the rim 304 and the flow surface 310. That is, the first surface 314 is modified to include the second surface 316 which lessens the material of the rim 304 at the location of the second surfaces 316.

The second surface 316 may have an axial depth D, as indicated in FIGS. 3B and 3C, and extend from the flow surface 310 downward radially, as shown in FIG. 3B. The axial depth D is a maximum depth of the second surface 316 relative to the first surface 314. In some embodiments, the first surface 314 may be configured to be axially aligned or nearly flush with an airfoil edge 321 of the airfoil 308. That is, no material of the rim 304 may extend axially past or beyond the airfoil edge 321 of the airfoil 308. Some prior configurations of integrally bladed disks may have included a trim edge of the rim which extended axially away from the airfoil edges. However, as provided herein, the trim edge of the rim is removed. Depending on the configuration of the integrally bladed disk, the airfoil edge may be a leading edge or a trailing edge, and in some configurations, the first surface may be aligned with both the leading and trailing edges, i.e., the integrally bladed disk may not include an arm (e.g., arm 306) as shown in the drawings.

In some embodiments, the first and second surfaces may form an integrally bladed disk rim face. The first surface may be a portion of the rim that is planar and axially proximal to an airfoil edge (e.g. rim face 314 close to airfoil edge 321). A second surface may be a surface that curves axially inward from a portion circumferentially proximal to a first airfoil to a depth D and curves axially back to the first surface at a second airfoil that is adjacent the first airfoil (e.g., second surface 316). The first and second surfaces 314, 316 may form a repeating pattern to define a continuous surface of the rim face. The pattern may be alternating first and second surfaces 314, 316 wherein each first surface 314 is located adjacent an airfoil 308 and each second surface 316 is located between adjacent airfoils 308. In some embodiments, each segment of the first surface 314 may be part of a plane and each second surface 316 may be a scallop or cut formed in the first surface 314 and extending axially into the rim 304.

Advantageously, an integrally bladed disk rim may be formed with first and second surfaces as provided herein that may mitigate stress and/or thermal creep concerns during operation of an integrally bladed disk. For example, embodiments provided herein may reduce load induced principle stress and hoop stress of the flow path surfaces of the integrally bladed disk. The location and configuration of the second surface (e.g., scallops formed in rim) may be based upon structural analysis models. The location of the first surface and the indent of the second surface may reduce the hoop stress of a rotor by removing material from the rim face (at both the first and second surfaces).

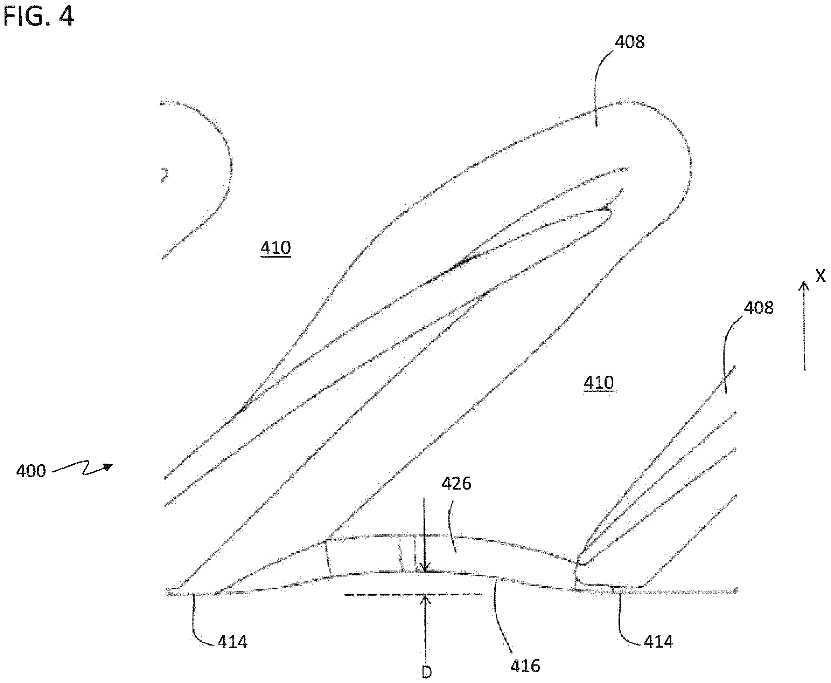

Turning now to FIG. 4, an alternative configuration of a rim face of an integrally bladed disk is shown. The integrally bladed disk 400 is configured similar to that shown in FIGS. 3A-3C, having a plurality of airfoils 408 configured about a rim of the integrally bladed disk 400, a flow path surface 410 located between each adjacent set of airfoils 408. As shown, a first surface 414 is formed flush with an airfoil edge of the airfoils 408. Between each pair of airfoils 408, the rim of the integrally bladed disk is curved axially inward to a depth D at the flow path surface 410 with a second surface 416. In the embodiment of FIG. 4, a transition portion 426 may extend radially downward from the flow path surface 410 toward the axis of the integrally bladed disk. That is, an angled surface (transition portion 426) may extend and taper between the flow path surface 410 and the second surface 416. The transition portion 426 may be a straight surface or may be curved from the flow path surface 410 to the second surface 416.

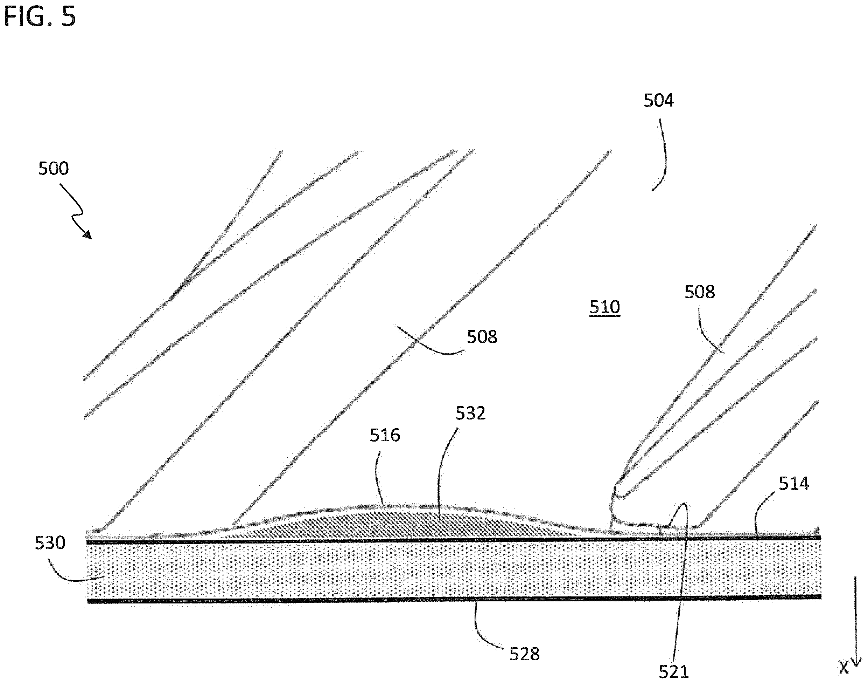

Turning now to FIG. 5, a schematic drawing illustrating one process for forming an integrally bladed disk in accordance with the present disclosure is shown. As will be appreciated by those of skill in the art, the structure and form of an integrally bladed disk may be pre-defined in a die, casting, mold, etc. and thus the following steps of material removal may not be required. However, the following is provided to show and describe material removal that may be performed on an existing integrally bladed disk that does not include the above described features prior to material removal.

As shown, the integrally bladed disk 500 includes a flow path surface 510 that may be part of a rim 504 (as shown and described above). The flow path surface 510 is located between adjacent airfoils 508. One edge of the rim is shown having a trim portion 528 that extends axially from the rim 504 away from airfoil edges 521 of the airfoils 508. When modifying the integrally bladed disk 500, trim material 530 may be removed to form a rim 504 having a first surface 514 that is flush or approximately even with the airfoil edge 521 of the airfoils 508. With the first surface 514 formed, additional rim material 532 may be removed from the rim 504 to form the second surface 516. As shown, the rim material 532 is removed to form the curved surface of the second surface 516.

As will be appreciated by those of skill in the art, the first and second surfaces of the rim face of an integrally bladed disk, as provided herein, can be formed by cutting, grinding, etc. In alternative configurations or in combination therewith, the first and/or second surfaces can be formed from a mold or die that does not include the trim material and may already include the shape of the second surface.

Advantageously, embodiments described herein provide an integrally bladed disk having reduced stresses and improved life. The formation of the features as shown and described herein may enable a large die out and thus change (and reduce) the stresses along the flow surface between adjacent airfoils. Further, advantageously, embodiments provided herein may be implemented in a newly formed, molded, cast, additively manufactured, or otherwise formed integrally bladed disk or may be implemented in an integrally bladed disk that has previously been formed and did not include features as described herein.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments.

For example, although described and shown with a smooth flow surface, in some embodiments, not shown, the scalloped or contoured rim surface may be combined with other features. For example, various configurations may be employed with trenches formed in flow surfaces to further reduce stresses.

Accordingly, the present disclosure is not to be seen as limited by the foregoing description, but is only limited by the scope of the appended claims.

## Claims

1. An integrally bladed disk (300; 400), comprising:
a rotor disk having a rim (304; 404) with a rim face and a flow path surface (310; 410) perpendicular to the rim face; and
integrally formed airfoils (308; 408) circumferentially spaced and extending radially outward from the rim, the flow path surface between adjacent integrally formed airfoils, each integrally formed airfoil having an airfoil edge (321);
wherein the rim face includes at least one first surface (314; 414) and at least one second surface (316; 416) formed in the rim face, the at least one first surface being substantially planar and axially proximal to the airfoil edge and the at least one second surface extending an axial depth (D) into the rim face relative to the first surface.

2. The integrally bladed disk (300; 400) of claim 1, wherein the airfoil edge (321) is a trailing edge of the integrally formed airfoils (308; 408).

3. The integrally bladed disk (300; 400) of any of the preceding claims, wherein the at least one first surface (314; 414) and the at least one second surface (316; 416) define a repeating pattern about the rim face of the rotor disk.

4. The integrally bladed disk (300; 400) of any of the preceding claims, wherein opposing rim faces of the rotor disk each include at least one first surface (314; 414) and at least one second surface (316; 416).

5. The integrally bladed disk (300; 400) of any of the preceding claims, wherein the second surface (316; 416) is located circumferentially between adjacent integrally formed airfoils (308; 408).

6. The integrally bladed disk (300; 400) of any of the preceding claims, wherein the second surface (316; 416) is a curved surface.

7. The integrally bladed disk (300; 400) of any of the preceding claims, wherein the second surface (316; 416) comprises a tapered portion (426).

8. A gas turbine engine (101) comprising a rotor disk and integrally formed airfoils (308; 408) in accordance with any of the preceding claims.

9. A method of forming an integrally bladed disk (500), the method comprising:
integrally forming airfoils (508) circumferentially spaced and extending radially outward from a rim (504) of a rotor disk, a flow path surface (510) between adjacent integrally formed airfoils, each integrally formed airfoil having an airfoil edge (521); and
forming at least one first surface (514) and at least one second surface (516) in a rim face of the rim, the rim face perpendicular to the flow path surface,
wherein the at least one first surface is formed substantially planar and axially proximal to the airfoil edge and the at least one second surface is formed to extend an axial depth (D) into the rim face relative to the first surface.

10. The method of claim 9, wherein the airfoil edge (521) is a trailing edge of the integrally formed airfoils (508).

11. The method of any of claims 9-10, wherein the at least one first surface (514) and the at least one second surface (516) define a repeating pattern about the rim face of the rotor disk.

12. The method of any of claims 9-11, wherein opposing rim faces of the rotor disk each include at least one first surface (514) and at least one second surface (516).

13. The method of any of claims 9-12, wherein the second surface (516) is located circumferentially between adjacent integrally formed airfoils (508).

14. The method of any of claims 9-13, wherein the second surface (516) is a curved surface and comprises a tapered portion (426).
